# DEMANDE DE BREVET EUROPEEN

(11) **EP 1 072 219 A1**
(43) Date de publication de la demande: **31.01.2001**
(21) Numéro de dépôt: 99202471.1
(22) Date de dépôt: 28.07.1999
(51) Int. Cl.: A47J 37/07

(54) **Appareil de barbecue, et méthode de réalisation d'un tel appareil**

(71) Demandeur: Saey N.V., 8501 Kortrijk/Heule (BE)
(72) Inventeur: Saey, Stephane, 8500 Kortrijk (BE)
(74) Mandataire: Leherte, Georges M.L.M., Dr.

(57) **Abrégé**

L'invention concerne un appareil à barbecue constitué: d'un dispositif d'allumage (1) ayant une forme et dimension standard, se constituant d'un tuyau (6) muni d'orifices d'aération (7); d'un foyer de cuisson (3) choisi parmi une série de foyers de différentes natures, formes et/ou dimensions, et de moyens (5), adaptés à ces foyers, permettant de maintenir les aliments à cuire au-dessus du foyer (3); d'un dispositif de support (19) pour ledit dispositif d'allumage (1), choisi parmi une série de dispositifs de support de différentes natures, formes et/ou dimensions; et, éventuellement, d'accessoires supplémentaires choisis parmi des séries de paravents (4), de couvercles (16), et/ou de bacs à cendres (17) et/ou à liquide d'extinction (15), de différentes natures, formes et/ou dimensions.

L'invention concerne également une méthode pour la réalisation d'appareils à barbecue, utilisant de tels éléments séparés.

## Description

La présente invention a pour objet une nouvelle approche à la réalisation d'appareils de type "barbecue". Les barbecues sont en général utilisés à titre privé pour griller des aliments à l'extérieur et sont souvent portables ou déplaçables.

Différents types de barbecues ont été conçus pour répondre à des problèmes particuliers.
Notamment le brevet EP 0 186 929 qui propose un barbecue avec un dispositif d'allumage raccordé à sa partie supérieure au foyer où est placé le charbon de bois. Ce dispositif d'allumage possède une chambre permetant de faire un feu de papier pour allumer le charbon de bois dans le foyer. Cette chambre présente des ouvertures de tirage pour l'arrivée d'oxygène vers le feu et est en communication avec le foyer du barbecue.

Le brevet EP 0 824 886 propose un barbecue comprenant un réservoir perméable à l'air que l'on peut suspendre dans le tube, pour l'allumage du combustible dans le foyer de barbecue. Un réservoir pour un extincteur liquide et/ou pour collecter les cendres peut être ajouté. Une grille de support amovible peut être disposée au dessus du foyer. L'appareil peut enfin être pourvu d'un couvercle.

Il reste que ces barbecues sont limités dans leurs utilisations tout comme dans leurs méthodes de réalisation. Or aujourd'hui les clients attendent une gamme diversifiée de produits, adaptés à leur goût et à leur usage personnel. La demande des consomateurs s'oriente donc vers une personnalisation des barbecues.

Le but principal de cette invention est de répondre à cette attente des consommateurs en proposant des appareils de type barbecue avec une plus grande flexibilité d'utilisation et plus facilement personnalisables. Les barbecues selon la présente invention offrent en outre l'avantage d'être sûrs, stables et d'un grand confort d'utilisation.

Pour cela, l'appareil à barbecue, selon l'invention, se constitue d'un dispositif d'allumage ayant une forme et dimension standard, constitué d'un tuyau muni d'orifices d'aération; d'un foyer de cuisson choisi parmi une série de foyers de différentes natures, formes et/ou dimensions, et de moyens, adaptés à ces foyers, permettant de maintenir les aliments à cuire au-dessus du foyer; d'un dispositif de support pour ledit dispositif d'allumage, choisi parmi une série de dispositifs de support de différentes natures, formes et/ou dimensions; et, eventuellement, d'accessoires supplémentaires choisis parmi des séries de paravents, de couvercles, et/ou de bacs à cendres et/ou à liquide d'extinction, de différentes natures, formes et/ou dimensions.

Le barbecue inventé fonctionne avec tous types de combustibles solides, en particulier du charbon de bois. Le dispositif d'allumage peut être amovible.
Comme indiqué, le foyer peut avoir des formes, dimensions et/ou natures très variées; le foyer peut, par exemple avoir la forme d'une cuve, circulaire, elliptique, carrée ou rectangulaire, se terminant de manière conique, arrondie ou droite vers le bas, plus ou moins profonde, en n'importe quelle matière résistant au feu et/ou à la chaleur, tel que les métaux (acier, innox, fonte, etc.), voire des matériaux céramiques et du verre.

Selon l'invention, le barbecue peut reposer soit sur un support fixe, soit sur un chariot.

Selon une variante préférée de l'invention, le dispositif de support pour le dispositif d'allumage consiste en une barre de support unique, essentiellement verticale, fixée à un moyen de support inférieur, essentiellement horizontal, le dispositif d'allumage étant suspendu en sa partie supérieure par une fixation essentiellement horizontale à ladite barre de support unique, au-dessus dudit support inférieur, essentiellement horizontal.

Dans la présente invention, ladite fixation essentiellement horizontale, reliant le dispositif d'allumage à ladite barre de support, peut être réglable en hauteur par rapport à la barre de support.

Selon un premier mode de réalisation de cette variante de l'invention, le dispositif de support pour le dispositif d'allumage est muni d'au moins une roue et constitue un chariot pour l'appareil de barbecue.

La ou les roues, selon la présente invention, est/sont disposée(s) sur ledit moyen de support inférieur, essentiellement horizontal, du dispositif de support pour le dispositif d'allumage .

Selon un second mode de réalisation de cette variante de l'invention, le dispositif de support pour le dispositif d'allumage est muni d'au moins deux roues.

Selon ce mode de réalisation, le dispositif de support pour le dispositif d'allumage peut plus particulièrement être muni de deux roues et au moins un pied.

Dans la variante préférée de l'invention impliquant une barre de support unique, les moyens permettant de maintenir les aliments à cuire au-dessus du foyer sont suspendus séparément à ladite barre de support unique, essentiellement verticale.
Ils peuvent soit être fixes soit placés à diverses hauteurs fixes par rapport à la barre de soutien. Ainsi le plan de cuisson a une hauteur fixe même si on règle la distance entre le foyer et la grille, ce qui offre un plus grand confort d'utilisation.

Par ailleurs, lesdits moyens permettant de maintenir les aliments à cuire au-dessus du foyer comportent, selon cette variante préférée de l'invention, un bord périphérique à l'intérieur duquel peut s'emboiter le foyer de cuisson lors du réglage en hauteur du dispositif d'allumage par rapport à ladite barre de support. Ce nouveau concept de bord périphérique permet de minimiser les pertes de chaleur sur le chemin entre le foyer et la grille pour cuire les aliments.

L'invention se rapporte également à une méthode d'assemblage d'appareils de barbecue dans laquelle on utilise comme élément de base un dispositif d'allumage ayant une forme et dimension standard, constitué d'un tuyau muni d'orifices d'aération, et qu'on y adjoint : Un foyer de cuisson choisi parmi une série de foyers de différentes natures, formes et/ou dimensions, et un moyen, adapté au foyer, permettant de maintenir les aliments à cuire au-dessus du foyer; un dispositif de support pour ledit dispositif d'allumage, choisi parmi une série de dispositifs de support de différentes natures, formes et/ou dimensions; et, eventuellement, des accessoires supplémentaires de différentes natures, formes et/ou dimensions, choisis parmi des séries de paravents, de couvercles, et/ou de bacs à cendres et/ou à liquide d'extinction, de tablettes et tringles de support, etc., et de manière générale de tous genres d'accessoires utilitaires ou décoratifs,.

En conclusion, la présente invention permet d'obtenir une gamme complète de barbecues avec un nombre très limité de pièces et susceptible de satisfaire tous les goûts.

Les figures 1 à 7 sont présentées pour clarifier l'invention. Elles correspondent à des modes particuliers de réalisation donnés à titre d'exemples et ne sauraient limiter la portée de l'invention.

Sur ces figures sont représentées:
- figures 1 à 5 des alternatives pour un barbecue sur pied fixe
- figures 6 et 7 des alternatives pour un barbecue sur chariot

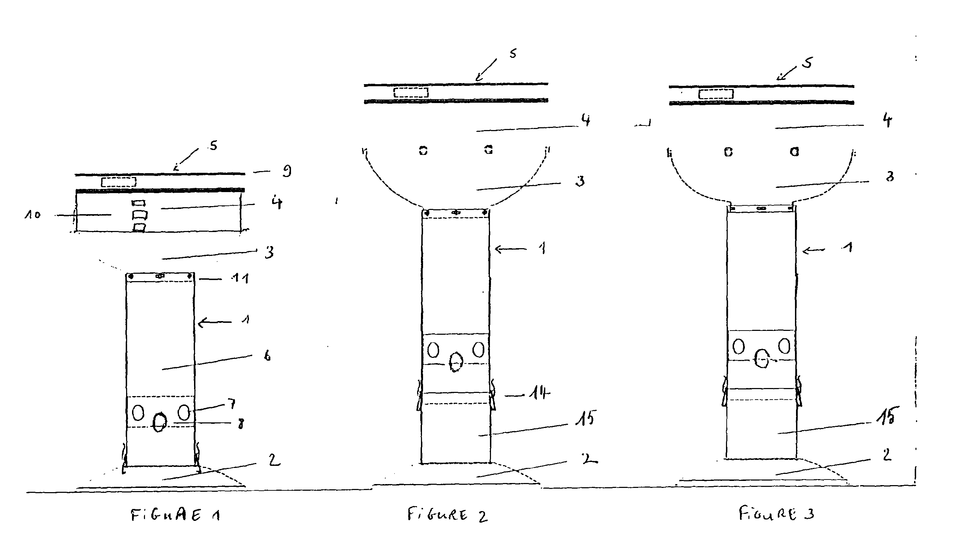

Sur la figure 1 le barbecue est constitué:
- d'un dispositif d'allumage (1) reposant sur pied fixe (2)
- d'un foyer de cuisson (3) protégé par un pare-vent (4)
- un moyen (5) permettant de maintenir les aliments à cuire au-dessus du foyer.

Le dispositif d'allumage (1) est composé d'un tuyau (6) muni d'orifices d'aération (7). Ici le tuyau (6) a une forme cylindrique mais il pourrait avoir une toute autre forme. Les orifices d'aération (7) sont ici obturables mais pourraient ne pas l'être. Ce sont des orifices obturables à l'aide d'une plaque de fermeture (non présentée) que l'on manipule grâce à une manette (8) en forme de grosse boule (qui donne au pied du barbecue un aspect caractéristique de "tête de clown", constituant une marque déposée de la société SAEY).

Le moyen (5) pour maintenir les aliments au-dessus du foyer correspond à un grill (9) dont on règle la hauteur par rapport au foyer grâce à des encoches (10) placées sur toute la hauteur du pare-vent (4).

Le foyer de cuisson possède à sa base un système de fixation (11) au dispositif d'allumage (1). Le foyer de cuisson (3) est circulaire et en acier. Il pourrait tout autant avoir une autre forme, d'autres dimensions et une autre composition.

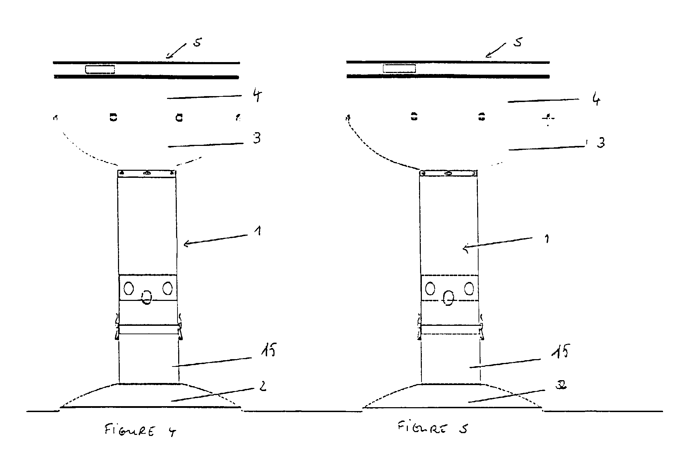

Sur la figure 2 est représenté un autre barbecue dans lequel on retrouve les mêmes éléments que dans le barbecue de la figure 1 à savoir:
- d'un dispositif d'allumage (1) reposant sur pied fixe (2)
- d'un foyer de cuisson (3) protégée par un pare-vent (4)
- un moyen (5) permettant de maintenir les aliments à cuire au-dessus du foyer.

Cependant, sous le tuyau d'allumage est placé ici un réservoir d'eau (15) qui s'adapte au tuyau grâce à une système prévu à cet effet (14). Le réservoir d'eau (15) possède une forme telle qu'il peut se fixer directement sur le pied fixe (2).
En outre, le foyer de cuisson (3) est plus profond que celui du barbecue de la figure 1. De ce fait, il est prévu un autre pare-vent (4), adapté à cette autre forme de foyer.

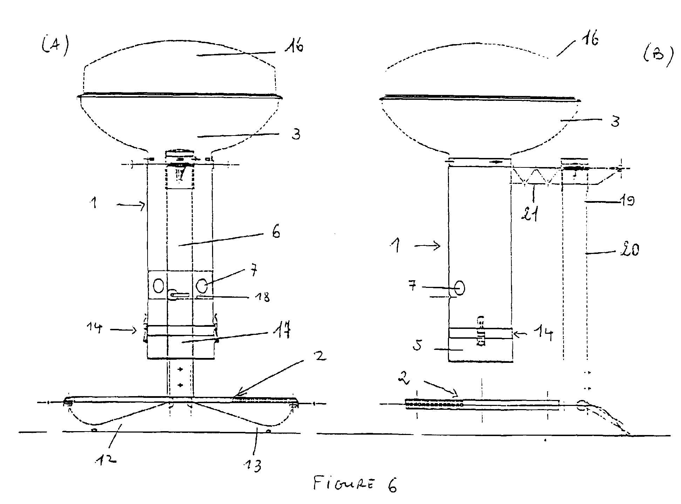

Sur la figure 3 est représenté un autre barbecue dans lequel on retrouve les mêmes éléments que dans le barbecue de la figure 2 à savoir:
- d'un dispositif d'allumage (1) reposant sur un pied fixe (2)
- d'un foyer de cuisson (3) protégé par un pare-vent (4)
- un moyen (5) permettant de maintenir les aliments à cuire au-dessus du foyer,
- un réservoir d'eau (15)

Cependant, la matière du foyer de cuisson (3) est différente puisque le foyer est en fonte et non plus en acier comme dans le barbecue de la figure 2.

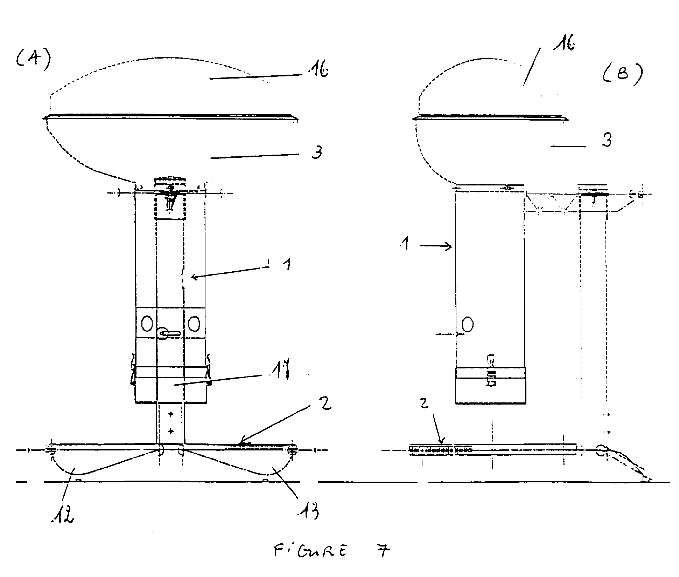

Sur la figure 4 est représenté un autre barbecue dans lequel on retrouve les mêmes éléments que dans le barbecue de la figure 3 à savoir:
- d'un dispositif d'allumage (1) reposant sur pied fixe (2)
- d'un foyer de cuisson (3) protégé par un pare-vent (4)
- un moyen (5) permettant de maintenir les aliments à cuire au-dessus du foyer
- un réservoir d'eau (15)

Cependant, le foyer de cuisson (3) n'est plus en fonte comme dans le barbecue de la figure 3 mais en acier comme dans le barbecue de la figure 2. La forme du foyer de cuisson (3) est elle aussi différente de celle du barbecue de la figure 3, puisqu'elle est beaucoup plus large. De ce fait, il est prévu un autre pare-vent (4), adapté à cette nouvelle forme du foyer et un moyen pour maintenir les aliments à cuire au-dessus du foyer plus large.

En outre, le pied fixe (2) est beaucoup plus large afin de maintenir la stabilité du barbecue.

Sur la figure 5 est représenté un autre barbecue dans lequel on retrouve les mêmes éléments que dans le barbecue de la figure 1, à savoir:
- d'un dispositif d'allumage (1) reposant sur pied fixe (2)
- d'un foyer de cuisson (3) protégé par un pare-vent (4)
- un moyen (5) permettant de maintenir les aliments à cuire au-dessus du foyer,
- un réservoir d'eau (15).

Cependant, la forme du foyer (3) est différente de celle du barbecue de la figure 4, puisque c'est une ellipse. De ce fait, il est prévu un autre pare-vent (4), adapté à cette nouvelle forme de foyer et un moyen (5) pour maintenir les aliments à cuire au-dessus du foyer plus large. En revanche, le pied fixe (2) reste le même.

On constate ainsi qu'avec un seul type de dispositif d'allumage, quatre ou cinq types de foyers, et quelques types d'accessoires, on peut réaliser une infinité de barbecues différents.

Sur la figure 6 est représenté un barbecue sur chariot, selon une vue de face (A) et de profil (B), comprenant:
- un dispositif d'allumage (1) reposant sur un support constitué d'un chariot (2) à deux roues (12 & 13)
- un foyer de cuisson (3) fermé par un couvercle (16)
- un moyen pour maintenir les aliments à cuire au-dessus du foyer du type de celui décrit pour la variante préférée de l'invention et qui n'est pas visible sur la présente figure - un réservoir pour les cendres (17)

Le foyer de cuisson a une forme circulaire et est composée d'acier.

Le dispositif d'allumage est constitué par un tuyau (6) muni d'orifices d'aération (7). Ici le tuyau a une forme cylindrique mais pourrait avoir une toute autre forme. Les orifices d'aérations (7) ici sont obturables mais pourraient ne pas l'être. Ce sont des orifices obturables à l'aide d'une plaque de fermeture que l'on manipule grâce à une manette (18) (au lieu de la boule des figures 1 - 5)
Le dispositif de support (19) pour le dispositif d'allumage (1) consiste en une barre de support unique (20) verticale et fixée au chariot horizontal (2) du barbecue. Le dispositif d'allumage (1) est suspendu en sa partie supérieure par une fixation horizontale (21) à ladite barre de support unique (20), au-dessus du chariot horizontal (2).

Ladite fixation essentiellement horizontale (21), reliant le dispositif d'allumage (1) à ladite barre de support (21), est réglable en hauteur par rapport à la barre de support (20).

En outre, le réservoir pour les cendres (17) est placé sous le tuyau d'allumage (6) et s'adapte au tuyau grâce à un système prévu à cet effet (14).

Sur la figure 7 est représenté un autre barbecue sur chariot, selon une vue de face (A) et une vue de profil (B), dans lequel on retrouve les mêmes éléments que dans le barbecue de la figure 6, à savoir:
- un dispositif d'allumage (1) reposant sur un chariot (2) à deux roues (12, 13)
- un foyer de cuisson (3) fermé par un couvercle (16)
- un moyen de maintenir les aliments à cuire au-dessus du foyer du type de celui décrit pour la variante préférée de l'invention et qui n'est pas représenté sur la figure
- un réservoir pour les cendres (17)

La seule différence avec le barbecue de la figure 6 vient de la forme du foyer de cuisson (3) qui ici est une ellipse. De ce fait, il est prévu un couvercle (16) qui s'y adapte pour fermer le foyer de cuisson (3).

On constate ainsi qu'avec un seul accessoire supplémentaire (un chariot avec une barre de support verticale à la place du pied), on multiplie fortement le nombre de variantes de construction possibles.

Il est à noter que le principe de la barre de support verticale, représenté à titre d'exemple pour le mode de réalisation avec chariot, peut également être appliqué à des modes de réalisation avec pied fixe, et que, de ce fait, il est également possible de réaliser un appareil de barbecue avec un pied fixe ayant un foyer de cuisson réglable en hauteur avec un grill à hauteur fixe par rapport à la barre de support verticale.

## Revendications

1. Appareil à barbecue, comportant
un foyer de cuisson pouvant recevoir du combustible solide,
des moyens permettant maintenir des aliments à cuire au-dessus de ce foyer,
un dispositif d'allumage et/ou tirage formant cheminée, disposé sous ledit foyer de cuisson, et un dispositif de support sur lequel est fixé ledit dispositif d'allumage,
**caractérisé en ce que** l'appareil est constitué
d'un dispositif d'allumage ayant une forme et dimension standard, constitué d'un tuyau muni d'orifices d'aération;
d'un foyer de cuisson choisi parmi une série de foyers de différentes natures, formes et/ou dimensions, et de moyens, adaptés à ces foyers, permettant de maintenir les aliments à cuire au-dessus du foyer;
d'un dispositif de support pour ledit dispositif d'allumage, choisi parmi une série de dispositifs de support de différentes natures, formes et/ou dimensions; et, eventuellement,
d'accessoires supplémentaires choisis parmi des séries de paravents, de couvercles, et/ou de bacs à cendres et/ou à liquide d'extinction, de différentes natures, formes et/ou dimensions.

2. Appareil à barbecue selon la revendication 1, **caractérisé en ce que** le dispositif de support pour le dispositif d'allumage consiste en une barre de support unique, essentiellement verticale, fixée à un moyen de support inférieur, essentiellement horizontal, le dispositif d'allumage étant suspendu en sa partie supérieure par une fixation essentiellement horizontale à ladite barre de support unique, au-dessus dudit support inférieur, essentiellement horizontal.

3. Appareil à barbecue selon la revendications 2, **caractérisé en ce** que ladite fixation essentiellement horizontale, reliant le dispositif d'allumage à ladite barre de support, est réglable en hauteur par rapport à la barre de support.

4. Appareil à barbecue selon l'une ou l'autre des revendications précédentes, **caractérisé en ce** que le dispositif de support pour le dispositif d'allumage est muni d'au moins une roue et constitue un chariot pour l'appareil de barbecue.

5. Appareil à barbecue selon la revendication 4 et l'une des revendications 2 - 3, **caractérisé en ce** que la ou les roues sont disposées sur ledit moyen de support inférieur, essentiellement horizontal, du dispositif de support pour le dispositif d'allumage .

6. Appareil à barbecue selon l'une ou l'autre des revendication 4 et 5, **caractérisé en ce** que le dispositif de support pour le dispositif d'allumage est muni d'au moins deux roues.

7. Appareil à barbecue selon l'une ou l'autre des revendication 4 et 5, **caractérisé en ce** que le dispositif de support pour le dispositif d'allumage est muni de deux roues et au moins un pied.

8. Appareil à barbecue selon la revendication 3 et l'une ou l'autre des revendications suivantes, **caractérisé en ce** que les moyens permettant de maintenir les aliments à cuire au-dessus du foyer sont suspendus séparément à ladite barre de support unique, essentiellement verticale.

9. Appareil à barbecue selon la revendication 8, **caractérisé en ce** que lesdits moyens permettant de maintenir les aliments à cuire au-dessus du foyer comportent un bord périphérique à l'intérieur duquel peut s'emboiter le foyer de cuisson lors du réglage en hauteur du dispositif d'allumage par rapport à ladite barre de support.

10. Méthode d'assemblage d'appareils de barbecue en réunissant un foyer de cuisson pouvant recevoir du combustible solide, des moyens permettant maintenir des aliments à cuire au-dessus de ce foyer, un dispositif d'allumage et/ou tirage formant cheminée, disposé sous ledit foyer de cuisson, et un dispositif de support sur lequel est fixé ledit dispositif d'allumage, **caractérisée en ce que** l'on utilise comme élément de base un dispositif d'allumage ayant une forme et dimension standard, constitué d'un tuyau muni d'orifices d'aération, et qu'on y adjoint :
un foyer de cuisson choisi parmi une série de foyerss de différentes natures, formes et/ou dimensions, et un moyen correspondant, permettant de maintenir les aliments à cuire au-dessus du foyer;
un dispositif de support pour ledit dispositif d'allumage, choisi parmi une série de dispositifs de support de différentes natures, formes et/ou dimensions; et, eventuellement,
des accessoires supplémentaires choisis parmi des séries de paravents, de couvercles, et/ou de bacs à cendres et/ou à liquide d'extinction, de différentes natures, formes et/ou dimensions.

11. Méthode d'assemblage d'appareils de barbecue selon la revendication 10, **caractérisée en ce que** l'on utilise un ou plusieurs éléments ayant les caractéristiques décrites dans l'une ou l'autre des revendications 1 à 9.
